# EUROPEAN PATENT APPLICATION

(11) **EP 4 598 130 A1**
(43) Date of publication of application: **06.08.2025**
(21) Application number: 22960130.7
(22) Date of filing: 29.09.2022
(51) Int. Cl.: H04W 36/26

(54) **TIME INDICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/122857
(87) International publication number: WO 2024/065494

(57) **Abstract**

The present application relates to the field of mobile communications. Disclosed are a time indication method and apparatus, and a device and a storage medium. The method is executed by a first access network device, the first access network device providing a serving cell for a terminal. The method comprises: a first access network device sending first information to a neighbor cell, wherein the first information is used for indicating the time required for handing over a terminal to the neighbor cell. In the solution provided in the embodiments of the present application, a serving cell provides a neighbor cell with the time required for handing over a terminal to the neighbor cell, so as to inform the neighbor cell of the time required for the handover of the terminal, such that the time for handover can be reserved for the terminal, and congestion caused by simultaneous handover of a plurality of terminals is eliminated, thereby improving the accuracy of the handover of the terminal, and thus ensuring the communication reliability.

## Description

### TECHNICAL FIELD

The present application relates to the field of mobile communication, and in particular to a time indication method, apparatus, device, and storage medium.

### BACKGROUND

In a mobile communication system, an NTN (Non-terrestrial Network) network communication system is proposed. The NTN network can use satellites as access network devices, to provide a communication transmission network for terminals. However, since the location of the access network device in the NTN network may change, a large number of terminals need to initiate random access and then complete cell handover, and congestion occurs, resulting in failure of random access. Therefore, a cell handover method based on the NTN network is urgently needed.

### SUMMARY

The embodiment of the present application provides a time indication method, apparatus, device, and storage medium, which resolves the congestion caused by simultaneous handover of a plurality of terminals, improves the handover accuracy of the terminal, and thus ensures communication reliability. The technical solution is as follows.

According to one aspect of the present application, a time indication method is provided, the method is performed by a first access network device, the first access network device provides a serving cell for a terminal, and the method includes:
sending first information to a neighboring cell, wherein the first information is used to indicate a time for the terminal to hand over to the neighboring cell.

According to another aspect of the present application, a time indication method is provided, the method is performed by a second access network device, the second access network device covers a neighboring cell corresponding to a serving cell, and the method includes:
receiving first information sent by the serving cell, wherein the first information is used to indicate a time for a terminal to hand over to the neighboring cell.

According to another aspect of the present application, a time indication method is provided, the method is performed by a terminal, and the method includes:
receiving second information or third information sent by a serving cell, wherein the second information is used to indicate an expected duration for a neighboring cell to send uplink scheduling information to the terminal, and the third information is used to indicate an actual duration for the neighboring cell to send uplink scheduling information to the terminal; and
monitoring the uplink scheduling information sent by the neighboring cell based on the second information or the third information.

According to another aspect of the present application, a time indication apparatus is provided, the apparatus is arranged in a first access network device, the first access network device provides a serving cell for a terminal, and the apparatus includes:
a sending module, configured to send first information to a neighboring cell, wherein the first information is used to indicate a time for the terminal to hand over to the neighboring cell.

According to another aspect of the present application, a time indication apparatus is provided, the apparatus is arranged in a second access network device, the second access network device covers a neighboring cell corresponding to a serving cell, and the apparatus includes:
a receiving module, configured to receive first information sent by the serving cell, wherein the first information is used to indicate a time for a terminal to hand over to the neighboring cell.

According to another aspect of the present application, a time indication apparatus is provided, the apparatus is arranged in a terminal, and the apparatus includes:
a receiving module, configured to receive second information or third information sent by a serving cell, wherein the second information is used to indicate an expected duration for a neighboring cell to send uplink scheduling information to the terminal, and the third information is used to indicate an actual duration for the neighboring cell to send uplink scheduling information to the terminal; and
a monitoring module, configured to monitor the uplink scheduling information sent by the neighboring cell based on the second information or the third information.

According to another aspect of the present application, a terminal is provided, the terminal includes: a processor; a transceiver connected to the processor; and a memory for storing executable instructions of the processor, wherein the processor is configured to load and execute executable instructions to implement the time indication methods as described above.

According to another aspect of the present application, an access network device is provided, the access network device includes: a processor; a transceiver connected to the processor; and a memory for storing executable instructions of the processor, wherein the processor is configured to load and execute executable instructions to implement the time indication methods as described above.

According to another aspect of the present application, a communication system is provided, the communication system includes a terminal and an access network device, the terminal is used to implement the time indication methods as described above, and the access network device is used to implement the time indication methods as described above.

According to another aspect of the present application, a computer-readable storage medium is provided, the readable storage medium stores executable program codes, and the executable program codes are loaded and executed by a processor to implement the time indication methods as described above.

According to another aspect of the present application, a chip is provided, the chip includes a programmable logic circuit and/or program instructions, the chip is used to implement the time indication methods as described above when run on a terminal or an access network device.

According to another aspect of the present application, a computer program product is provided, the computer program product is used to implement the time indication methods as described above when executed by the processor of the terminal or the access network device.

In the solution provided in the embodiment of the present application, the serving cell provides the neighboring cell with the time for a terminal to hand over to the neighboring cell, informing the neighboring cell of the handover time required by the terminal, thus the handover time can be reserved for the terminal, resolving the congestion caused by simultaneous handover of a plurality of terminals, improves the handover accuracy of the terminal, and thus ensures communication reliability.

### BRIEF DESCRIPTION OF THE DRAWINGS

In order to more clearly illustrate the technical solutions in the embodiments of the present application, the following will briefly introduce the drawings required for the description of the embodiments. The drawings described below are only some embodiments of the present application. For ordinary technicians in this field, other drawings can be obtained based on these drawings without creative work.
FIG. 1 shows a block diagram of a communication system provided by an example embodiment of the present application;
FIG. 2 shows a block diagram of a communication system provided by another example embodiment of the present application;
FIG. 3 shows a block diagram of a communication system provided by another example embodiment of the present application;
FIG. 4 shows a flow chart of a time indication method provided by an example embodiment of the present application;
FIG. 5 shows a flow chart of a time indication method provided by an example embodiment of the present application;
FIG. 6 shows a flow chart of a time indication method provided by an example embodiment of the present application;
FIG. 7 shows a flow chart of a time indication method provided by an example embodiment of the present application;
FIG. 8 shows a flow chart of a time indication method provided by an example embodiment of the present application;
FIG. 9 shows a block diagram of a time indication apparatus provided by an example embodiment of the present application;
FIG. 10 shows a block diagram of a time indication apparatus provided by another example embodiment of the present application;
FIG. 11 shows a block diagram of a time indication apparatus provided by an example embodiment of the present application;
FIG. 12 shows a block diagram of a time indication apparatus provided by another example embodiment of the present application;
FIG. 13 shows a block diagram of a time indication apparatus provided by an example embodiment of the present application;
FIG. 14 shows a block diagram of a time indication apparatus provided by another example embodiment of the present application; and
FIG. 15 shows a schematic diagram of the structure of a communication device provided by an example embodiment of the present application.

### DETAILED DESCRIPTION

To make the purpose, technical solutions and advantages of the present application clearer, the implementations of the present application will be further described in detail in conjunction with the accompanying drawings.

The example embodiments will be described in detail here, and examples thereof are shown in the accompanying drawings. Unless otherwise indicated, the same numbers in different drawings represent the same or similar elements when the following description refers to the drawings. The implementations described in the following example embodiments do not represent all implementations consistent with the present application. Instead, they are only examples of devices and methods consistent with some aspects of the present application as detailed in the attached claims.

The terms used in the present application are only for the purpose of describing specific embodiments and are not intended to limit the present application. The singular forms "one", "said" and "the" used in the present application and the attached claims are also intended to include plural forms, unless the context clearly indicates other meanings. It should also be understood that the term "and/or" used herein refers to and includes any or all possible combinations of one or more associated listed items.

It should be understood that, although the terms first, second, third, etc. may be used in the present application to describe various information, these information should not be limited to these terms. These terms are only used to distinguish the same type of information from each other. For example, without departing from the scope of the present application, the first information may also be referred to as the second information, and similarly, the second information may also be referred to as the first information. Depending on the context, for example, the word "if" used herein may be interpreted as "at..." or "when..." or "in response to determining".

It should be noted that, the information (including but not limited to user equipment information, user personal information, etc.), data (including but not limited to data for analysis, stored data, displayed data, etc.) and signals involved in the present application are all authorized by the user or fully authorized by all parties, and the collection, use and processing of relevant data need to comply with relevant laws, regulations and standards of relevant countries and regions.

The application scenario of the present application is described below.

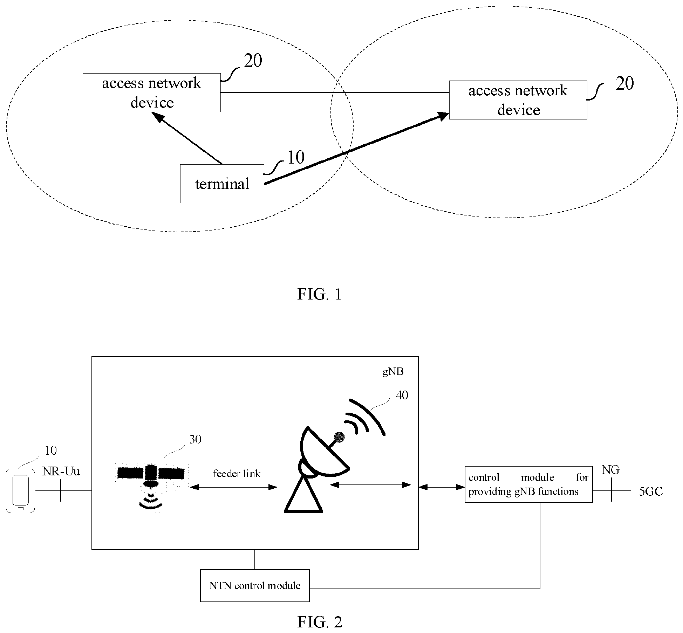

Please refer to FIG. 1, which shows a block diagram of a communication system provided by an example embodiment of the present application. The communication system may include: a terminal device 10 and a network device, wherein the network device may include at least one of the access network devices 20.

The terminal device 10 may refer to user equipment (UE), an access terminal, a user unit, a user station, a mobile station, a mobile station (MS), a remote station, a remote terminal, a mobile device, a wireless communication device, a user agent or a user device. Optionally, the terminal device 10 may also be a cellular phone, a cordless phone, a Session Initiation Protocol (SIP) phone, a Wireless Local Loop (WLL) station, a Personal Digital Assistant (PDA), a handheld device with wireless communication functions, a computing device or other processing devices connected to a wireless modem, a vehicle-mounted device, a wearable device, a terminal device in the fifth generation mobile communication system (5th Generation System, 5GS) or a terminal device in the future evolved Public Land Mobile Network (PLMN), etc., and the embodiments of the present application are not limited to this. For the convenience of description, the above-mentioned devices are collectively referred to as terminal devices. The number of terminal devices 10 is usually plural, and one or more terminal devices 10 can be distributed in each cell managed by an access network device 20.

The access network device 20 is a device deployed in the access network to provide wireless communication functions for the terminal device 10. The access network device 20 may include various forms of macro base stations, micro base stations, relay stations, access points, etc. In systems using different wireless access technologies, the names of devices with access network device functions may be different, for example, in 5G NR systems, they are called gNodeB or gNB. With the evolution of communication technology, the name "access network device" may change. For the convenience of description, in the embodiments of the present application, the above-mentioned devices that provide wireless communication functions for the terminal device 10 are collectively referred to as access network devices. Optionally, a communication relationship can be established between the terminal device 10 and the core network device 21 through the access network device 20. For example, in a Long Term Evolution (LTE) system, the access network device 20 can be an Evolved Universal Terrestrial Radio Access Network (EUTRAN) or one or more eNodeBs in EUTRAN; in a 5G NR system, the access network device 20 can be a Radio Access Network (RAN) or one or more gNBs in RAN.

For example, each access network device 20 includes one or more transmission reference points (TRPs), each TRP can be called a positioning node, and the terminal device receives the downlink positioning signal sent by the positioning node, and measures and reports the downlink positioning signal.

The "5G NR system" in the embodiment of the present application can also be called a 5G system or an NR system, but those skilled in the art can understand its meaning. The technical solution described in the embodiment of the present application can be applied to the 5G NR system, and can also be applied to the subsequent evolution systems of the 5G NR system.

The technical solutions of the embodiments of the present application can be applied to various communication systems, such as the Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long Term Evolution (LTE-A) system, New Radio (NR) system, evolving system of the NR system, LTE based access to Unlicensed spectrum (LTE U) system, NR-U system, Universal Mobile Telecommunication System (UMTS), Worldwide Interoperability for Microwave Access (WiMAX) communication system, Wireless Local Area Networks (WLAN), Wireless Fidelity (WiFi) system, next generation communication systems or other communication systems, etc.

In some embodiments, the communication system shown in FIG. 1 is applied to the NTN network architecture. For example, as shown in FIG. 2, the NTN network architecture includes a terminal 10, a transfer device 30 and a ground station 40.

The transfer device 30 and the ground station 40 can be understood as the access network device 20 in the above embodiment, and the access network device 20 includes a control module for providing gNB functions. The transfer device 30 and the ground station 40 communicate through the feeder link, to form an NTN service link issuance system. The transfer device 30 and the ground station 40 are controlled by the NTN control module, the NTN control module is connected to the control module for providing gNB functions, the terminal 10 communicates with the transfer device 30 through NR-Uu (a communication interface), and the control module for providing gNB functions communicates with the 5GC network through NG (a communication interface).

In the embodiment of the present application, if a signal needs to be sent to the terminal 10, the signal is first sent to the transfer device 30 and the ground station 40, and then the transfer device 30 and the ground station 40 forward the received signal to the terminal 10.

Optionally, the transfer device 30 can be a satellite, a drone, or other devices with a transfer function, which is not limited in the embodiment of the present application.

In some embodiments, the transfer device 30 can include a plurality of transfer devices, each of which manages at least one cell, that is, the transfer device 30 needs to configure the parameter configuration of each cell for the terminal, please refer to the following embodiment for details.

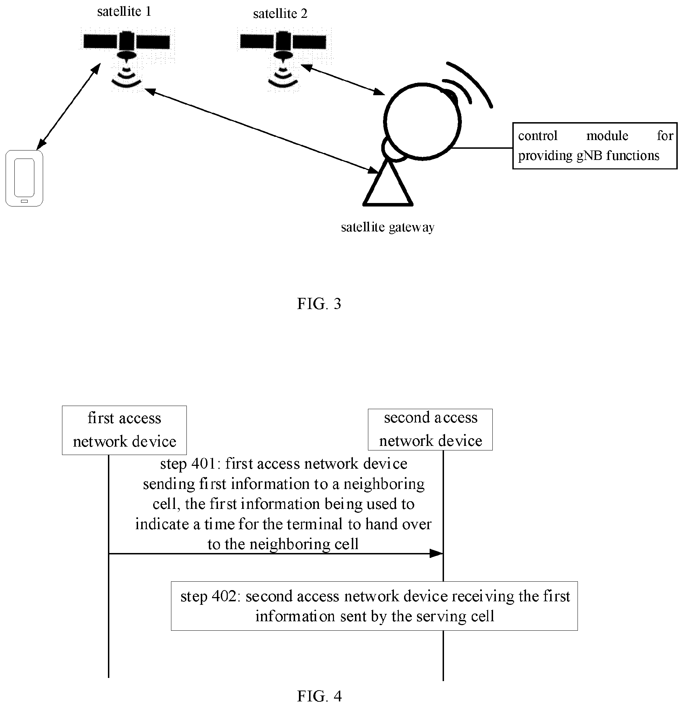

For example, the transfer device 30 is a satellite. In the embodiment shown in FIG. 3, satellite 1 and satellite 2 are connected to the gNB function module through a satellite gateway, that is, satellite 1 and satellite 2 use the same parameter configuration to configure the cell for the terminal, so the cell managed by satellite 1 and satellite 2 can use the same parameter configuration.

Different satellites manage different cells, for example, the cell managed by satellite 1 is cell 1, and the cell managed by satellite 2 is cell 2.

For another example, in addition to that shown in FIG. 3, satellite 1 and satellite 2 are connected to the Gnb functional module through two satellite gateways respectively, that is, satellite 1 and satellite 2 use different parameter configurations.

It should be noted that, the NTN network architecture shown in FIG. 2 or FIG. 3 is only an example, and the present application is not limited to the network architecture shown in FIG. 2 or FIG. 3, and other types of network structures are also applicable.

FIG. 4 shows a flowchart of a time indication method provided by an example embodiment of the present application, which can be, for example, applied to the access network device shown in FIG. 1, and the method includes at least part of the following contents.

Step 401, the first access network device sends first information to a neighboring cell, the first information is used to indicate a time for the terminal to hand over to the neighboring cell.

The first access network device provides a serving cell for the terminal. The serving cell is the cell currently accessed by the terminal, and can provide services for the terminal.

In addition, the neighboring cell is the target cell that the terminal needs to hand over to. In the embodiment of the present application, the number of the neighboring cells can be plural, and the plurality of neighboring cells are all candidate target cells that the terminal may hand over to, that is, the first access network device will send first information to each of the plurality of neighboring cells, and then inform each neighboring cell of the time when the terminal hands over to the neighboring cell.

It should be noted that the embodiment of the present application is described by taking the first access network device sending the first information to the neighboring cell as an example. In another embodiment, the first access network device covers the serving cell, and the first access network device sending the first information to the neighboring cell can also be understood as the serving cell sending the first information to the neighboring cell. Or it can also be understood as the first access network device sending the first information to the second access network device.

Step 402, the second access network device receives the first information sent by the serving cell.

In the embodiment of the present application, the first access network device (which can also be understood as the serving cell) sends the first information to the second access network device (neighboring cell), and the second access network device (neighboring cell) can receive the first information sent by the first access network device (serving cell).

It should be noted that the steps executed by the terminal in the embodiment of the present application can form a new embodiment separately, the steps executed by the access network device can form a new embodiment separately, and the steps executed by the core network device can also form a new embodiment separately.

In the solution provided in the embodiment of the present application, the serving cell provides the neighboring cell with the time for a terminal to hand over to the neighboring cell, informing the neighboring cell of the handover time required by the terminal, thus the handover time can be reserved for the terminal, resolving the congestion caused by simultaneous handover of a plurality of terminals, improves the handover accuracy of the terminal, and thus ensures communication reliability.

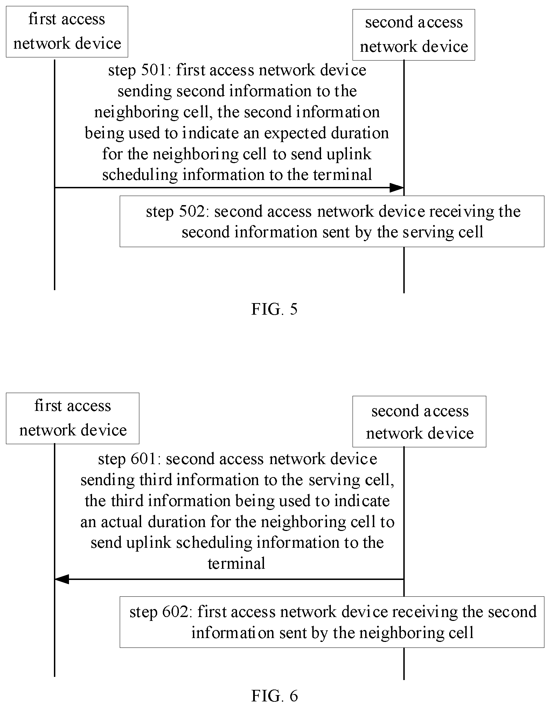

FIG. 5 shows a flowchart of a time indication method provided by an example embodiment of the present application, which can be, for example, applied to the access network device shown in FIG. 1, and the method includes at least part of the following contents.

Step 501: the first access network device sends second information to the neighboring cell, wherein the second information is used to indicate an expected duration for the neighboring cell to send uplink scheduling information to the terminal.

Step 502: the second access network device receives the second information sent by the serving cell.

In the embodiment of the present application, the first access network device (serving cell) sends the second information to the neighboring cell (second access network device), and the second information is used to indicate an expected duration for the neighboring cell to send uplink scheduling information to the terminal, and the neighboring cell (second access network device) receives the second information sent by the serving cell (first access network device).

The uplink scheduling information is used for the terminal to hand over to a neighboring cell, the terminal does not need to access the neighboring cell by random access. Instead, the terminal directly sends data to the neighboring cell (target cell) on the uplink scheduling information, which saves the process for the terminal to hand over to the neighboring cell, thereby saving overhead of the terminal and improving the handover efficiency.

In the embodiment of the present application, the first access network device can predict the time when the terminal hands over to the neighboring cell, and also indicate to the neighboring cell the expected duration of sending the uplink scheduling information to the terminal, so that the duration used by the neighboring cell to send the uplink scheduling information to the terminal can refer to the expected duration.

For example, the expected duration is 2ms (milliseconds), 3ms or other values, which are not limited in the embodiment of the present application.

In the scheme provided in the embodiment of the present application, the first access network device indicates to the neighboring cell the expected duration of sending the uplink scheduling information to the terminal, so that the neighboring cell sends the uplink scheduling information based on the indicated expected duration, thereby reserving the handover time for the terminal, which solves the problem of congestion caused by simultaneous handover of a plurality of terminals, improves the handover accuracy of the terminal, and thus ensures communication reliability.

It should be noted that the embodiment of the present application is described by taking the serving cell sending the second information to the neighboring cell as an example. In another embodiment, the neighboring cell can also report the actual duration of sending the uplink scheduling information to the serving cell. FIG. 6 shows a flowchart of a time indication method provided by an example embodiment of the present application, which can be applied to the access network device shown in FIG. 1, and the method includes at least part of the following contents.

Step 601: the second access network device sends third information to the serving cell, wherein the third information is used to indicate an actual duration for the neighboring cell to send uplink scheduling information to the terminal.

Step 602: the first access network device receives the second information sent by the neighboring cell.

In the embodiment of the present application, the neighboring cell (the second access network device) sends the third information to the first access network device (the serving cell), and the third information is used to indicate the actual duration for the neighboring cell to send the uplink scheduling information to the terminal, and the serving cell (the first access network device) receives the third information sent by the neighboring cell (the second access network device).

In the embodiment of the present application, the neighboring cell actually records the duration required to send the uplink scheduling information to the terminal, and also reports to the serving cell the actual duration of sending the uplink scheduling information to the terminal.

For example, the actual duration is 2ms (milliseconds), 3ms or other values, which are not limited in the embodiment of the present application.

It should be noted that the data transmission between the serving cell and the neighboring cell may include any of the following situations.

The first situation: after the serving cell sends the first information to the neighboring cell, the neighboring cell can report the third information to the serving cell.

In the embodiment of the present application, the serving cell does not indicate to the neighboring cell the expected duration of sending the uplink scheduling information, so the neighboring cell can determine the duration of sending the uplink scheduling information to the terminal by itself, and report to the serving cell the actual duration of sending the uplink scheduling information to the terminal.

The second type: after the serving cell sends the first information and the second information to the neighboring cell, the neighboring cell reports the third information to the serving cell.

In the embodiment of the present application, the serving cell indicates to the neighboring cell the expected duration of sending the uplink scheduling information, so the neighboring cell can determine the duration of sending the uplink scheduling information to the terminal by itself or according to the expected duration, and report to the serving cell the actual duration of sending the uplink scheduling information to the terminal.

The third type: the serving cell sends the first information and the second information to the neighboring cell, and the neighboring cell will not report the third information to the serving cell.

In the embodiment of the present application, the serving cell indicates to the neighboring cell the expected duration of sending the uplink scheduling information, so the neighboring cell can determine the duration of sending the uplink scheduling information to the terminal by itself or according to the expected duration, and the neighboring cell does not need to report to the serving cell the actual duration of sending the uplink scheduling information.

FIG. 4 illustrates the sending of the first information to the neighboring cell by the serving cell. The information specifically included in the first information is described below.

In some embodiments, the first information includes at least one of a first moment or a first time period. The first information is used to indicate the moment when the neighboring cell performs handover with the terminal. It can also be understood that the first moment or any moment in the first time period is the moment when the neighboring cell begins to perform handover with the terminal.

In the embodiment of the present application, the terminal no longer needs to hand over to the neighboring cell by random access, but directly hands over to the neighboring cell through direct scheduling by the neighboring cell, so the first information indicates the moment when the neighboring cell begins to schedule the terminal.

Optionally, if the first information includes the first moment, the first moment is used to indicate a moment when the neighboring cell sends uplink scheduling information to the terminal, that is, the neighboring cell sends uplink scheduling information to the terminal at the first moment.

Optionally, if the first information includes the first time period, the first time period is used to indicate that the moment when the neighboring cell sends uplink scheduling information to the terminal belongs to the first time period, that is, the neighboring cell sends uplink scheduling information to the terminal at any moment in the first time period.

It should be noted that the embodiment of the present application describes the moment when the neighboring cell sends uplink scheduling information to the terminal. The neighboring cell will continue to send uplink scheduling information for a certain duration, so the neighboring cell will also send uplink scheduling information to the terminal according to a certain duration.

In some embodiments, the duration for the neighboring cell to send uplink scheduling information to the terminal is the expected duration indicated by the second information.

The expected duration indicated by the second information is similar to the above embodiment, which will not be repeated here.

In addition, in the embodiment of the present application, if the serving cell configures the second information for the neighboring cell, that is, the serving cell configures the duration expected by the serving cell for the neighboring cell, the neighboring cell can send the uplink scheduling information according to the expected duration expected by the serving cell.

In some embodiments, the duration for the neighboring cell to send the uplink scheduling information to the terminal is the actual duration indicated by the third information.

The actual duration indicated by the third information is similar to the above embodiment, which will not be repeated here.

In addition, in the embodiment of the present application, the serving cell may configure the second information for the neighboring cell, or may not configure the second information for the neighboring cell, but the neighboring cell sends the uplink scheduling information to the terminal according to its own needs, then the neighboring cell can send the uplink scheduling information to the terminal according to the actual duration of its own needs. In addition, the neighboring cell will also report to the serving cell the actual duration of sending the uplink scheduling information to the terminal.

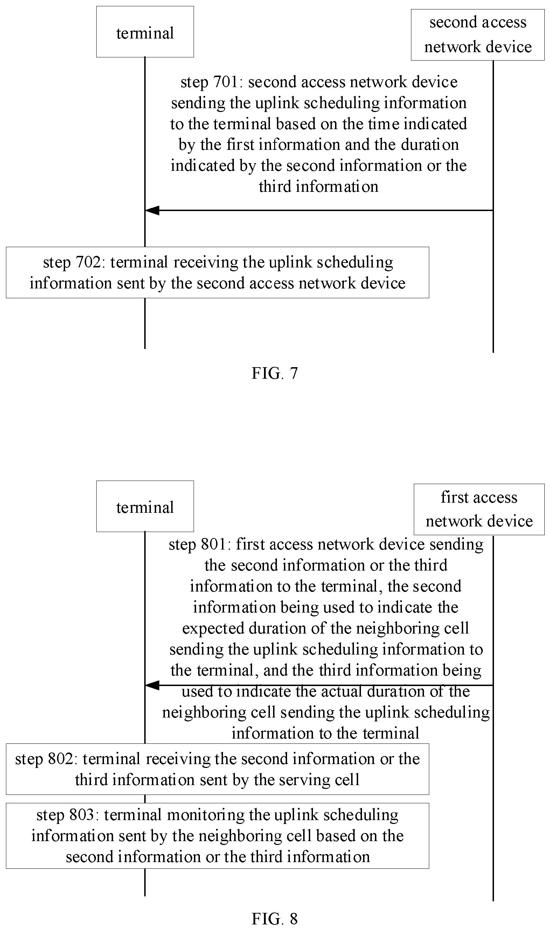

The above embodiment describes the second information and the third information, and for the neighboring cell, the neighboring cell will send the uplink scheduling information to the terminal considering both the time indicated by the first information and the duration indicated by the second information or the third information. FIG. 7 shows a flowchart of a time indication method provided by an example embodiment of the present application, which can be, for example, applied to the access network device and the terminal as shown in FIG. 1. The method includes at least part of the following contents.

Step 701: the second access network device sends the uplink scheduling information to the terminal based on the time indicated by the first information and the duration indicated by the second information or the third information.

Step 702: the terminal receives the uplink scheduling information sent by the second access network device.

In the embodiment of the present application, the first information indicates the time when the terminal hands over to the neighboring cell. Specifically, the second access network device may determine the moment to send the uplink scheduling information based on the first information, send the uplink scheduling information to the terminal at this moment, and send the uplink scheduling information to the terminal according to the duration indicated by the second information or the third information.

Optionally, if the first information includes the first moment, the first moment is used to indicate a moment when the neighboring cell sends uplink scheduling information to the terminal, that is, the neighboring cell sends uplink scheduling information to the terminal at the first moment.

Optionally, if the first information includes the first time period, the first time period is used to indicate that the moment when the neighboring cell sends uplink scheduling information to the terminal belongs to the first time period, that is, the neighboring cell sends uplink scheduling information to the terminal at any moment in the first time period.

In addition, after sending the uplink scheduling information to the terminal at a determined moment, the second access network device will also send the uplink scheduling information to the terminal according to the duration indicated by the second information or the third information.

Optionally, the second access network device sends the uplink scheduling information to the terminal according to the expected duration indicated by the second information.

Optionally, the second access network device sends the uplink scheduling information to the terminal according to the actual duration indicated by the third information.

It should be noted that the second access network device in the embodiment of the present application is equivalent to the neighboring cell, that is, the embodiment of the present application can be understood as that the neighboring cell sends the uplink scheduling information to the terminal based on the time indicated by the first information and the duration indicated by the second information or the third information.

The above embodiment describes the information transmitted between the serving cell and the neighboring cell, and the serving cell may also send the second information or the third information to the terminal, so that the terminal can monitor the uplink scheduling information sent by the neighboring cell.

FIG. 8 shows a flowchart of a time indication method provided by an example embodiment of the present application, which can be, for example, applied to the access network device and the terminal shown in FIG. 1. The method includes at least part of the following contents.

Step 801: the first access network device sends the second information or the third information to the terminal, the second information is used to indicate the expected duration for the neighboring cell to send the uplink scheduling information to the terminal, and the third information is used to indicate the actual duration for the neighboring cell to send the uplink scheduling information to the terminal.

Step 802: the terminal receives the second information or the third information sent by the serving cell.

In the embodiment of the present application, after the first access network device determines the second information or the third information, the first access network device can send the determined second information or the third information to the terminal. Since the second information or the third information indicates the duration for the neighboring cell to send the uplink scheduling information to the terminal, the terminal can determine the duration for the neighboring cell to send the uplink scheduling information after receiving the second information or the third information sent by the serving cell.

In some embodiments, after the serving cell sends the first information to the neighboring cell, the neighboring cell can report the third information to the serving cell, that is, the neighboring cell reports the third information, and the serving cell obtains the third information, so the serving cell can send the third information to the terminal.

In other embodiments, after the serving cell sends the first information and the second information to the neighboring cell, the neighboring cell reports the third information to the serving cell, that is, the serving cell not only obtains the second information, but also obtains the third information, then the information sent by the serving cell to the terminal includes any of the following situations.
(1) The serving cell sends the third information to the terminal. Since the second information is the expected duration that the serving cell expects the neighboring cell to send the uplink scheduling information to the terminal, and the third information is the actual duration that the neighboring cell actually sends the uplink scheduling information to the terminal, the serving cell sends the third information to the terminal, and the terminal can monitor the uplink scheduling information sent by the neighboring cell within the actual duration.
(2) The serving cell sends the second information to the terminal. Since the second information is the expected duration that the serving cell expects the neighboring cell to send the uplink scheduling information to the terminal, and the third information is the actual duration that the neighboring cell actually sends the uplink scheduling information to the terminal, the serving cell sends the second information to the terminal, and the terminal can monitor the uplink scheduling information sent by the neighboring cell according to the expected duration.

Step 803: the terminal monitors the uplink scheduling information sent by the neighboring cell based on the second information or the third information.

In an embodiment of the present application, the serving cell informs the terminal of the duration for the neighboring cell to send the uplink scheduling information, the terminal can monitor the uplink scheduling information based on the duration indicated by the determined second information or the third information.

In some embodiments, the uplink scheduling information is carried on the PDCCH (Physical Downlink Control Channel), so the terminal monitors the PDCCH based on the second information or the third information, and then monitor to obtain the uplink scheduling information sent by the neighboring cell.

In the scheme provided by the embodiment of the present application, the terminal monitors the uplink scheduling information sent by the neighboring cell according to the duration indicated by the serving cell, and then the terminal can hand over to the neighboring cell according to the monitored uplink scheduling information, which resolves the congestion caused by simultaneous handover of a plurality of terminals, improves the handover accuracy of the terminal, and thus ensures communication reliability.

It should be noted that the embodiment of the present application is illustrated by taking that the terminal can monitor the uplink scheduling information as an example. In another embodiment, the terminal may fail to monitor the uplink scheduling information within the duration, and then the terminal initiates a random access process when it fails to monitor the uplink scheduling information sent by the neighboring cell within the duration corresponding to the second information or the third information, that is, the terminal hands over to the neighboring cell through the random access process.

It should be noted that the above embodiments can be split into new embodiments, or combined with other embodiments to form new embodiments, and the present application does not limit the combination of the embodiments.

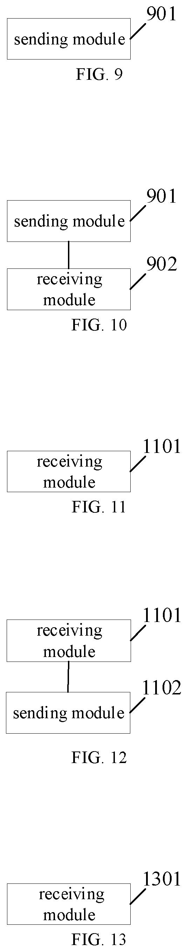

FIG. 9 shows a block diagram of a time indication apparatus provided by an example embodiment of the present application, the apparatus is arranged in a first access network device, and the first access network device covers a serving cell. Referring to FIG. 9, the apparatus includes:
a sending module 901, configured to send first information to a neighboring cell, wherein the first information is used to indicate a time for the terminal to hand over to the neighboring cell.

In some embodiments, the sending module 901 is also used to:
send second information to the neighboring cell, wherein the second information is used to indicate an expected duration for the neighboring cell to send uplink scheduling information to the terminal.

In some embodiments, referring to FIG. 10, the apparatus also includes:
a receiving module 902, used to receive third information sent by the neighboring cell, wherein the third information is used to indicate an actual duration for the neighboring cell to send uplink scheduling information to the terminal.

In some embodiments, the sending module 901 is also used to send second information or third information to the terminal, wherein the terminal is configured to monitor the uplink scheduling information sent by the neighboring cell based on the second information or the third information.

In some embodiments, the first information includes at least one of a first moment or a first time period.

In some embodiments, the first information includes the first moment, the first moment is used to indicate a moment when the neighboring cell sends uplink scheduling information to the terminal;
or,
the first information includes the first time period, the first time period is used to indicate that the moment when the neighboring cell sends uplink scheduling information to the terminal belongs to the first time period.

It should be noted that the apparatus provided in the above embodiments is illustrated only by the division of the above functional modules when implementing its function. In actual application, the above functions can be completed by different functional modules as needed, that is, the internal structure of the device is divided into different functional modules to complete all or part of the functions described above. In addition, the apparatus and method embodiments provided in the above embodiments belong to the same concept, and the specific implementation process is detailed in the method embodiment, which will not be repeated here.

FIG. 11 shows a block diagram of a time indication apparatus provided by an example embodiment of the present application, the apparatus is arranged in a second access network device, and the second access network device covers a neighboring cell corresponding to the serving cell. Referring to FIG. 11, the apparatus includes:
a receiving module 1101, configured to receive first information sent by the serving cell, wherein the first information is used to indicate a time for a terminal to hand over to the neighboring cell.

In some embodiments, the receiving module 1101 is further used to receive second information sent by the serving cell, wherein the second information is used to indicate an expected duration for the neighboring cell to send uplink scheduling information to the terminal.

In some embodiments, referring to FIG. 12, the apparatus further includes:
a sending module 1102, used to send third information to the serving cell, wherein the third information is used to indicate an actual duration for the neighboring cell to send uplink scheduling information to the terminal.

In some embodiments, the first information includes at least one of a first moment or a first time period.

In some embodiments, referring to FIG. 12, the apparatus further includes: a sending module 1102;
the first information including the first moment, the sending module 1102 is used to send the uplink scheduling information to the terminal at the first moment;
   or,
the first information including the first time period, the sending module 1102 is used to send the uplink scheduling information to the terminal at any moment in the first time period.

In some embodiments, a duration of sending the uplink scheduling information is an expected duration indicated by second information, or an actual duration indicated by third information.

It should be noted that the apparatus provided in the above embodiments is illustrated only by the division of the above functional modules when implementing its function. In actual application, the above functions can be completed by different functional modules as needed, that is, the internal structure of the device is divided into different functional modules to complete all or part of the functions described above. In addition, the apparatus and method embodiments provided in the above embodiments belong to the same concept, and the specific implementation process is detailed in the method embodiment, which will not be repeated here.

FIG. 13 shows a block diagram of a time indication apparatus provided by an example embodiment of the present application. Referring to FIG. 13, the apparatus includes:
a receiving module 1301, used to receive second information or third information sent by a serving cell, wherein the second information is used to indicate an expected duration for a neighboring cell to send uplink scheduling information to the terminal, and the third information is used to indicate an actual duration for the neighboring cell to send uplink scheduling information to the terminal; and
monitoring the uplink scheduling information sent by the neighboring cell based on the second information or the third information.

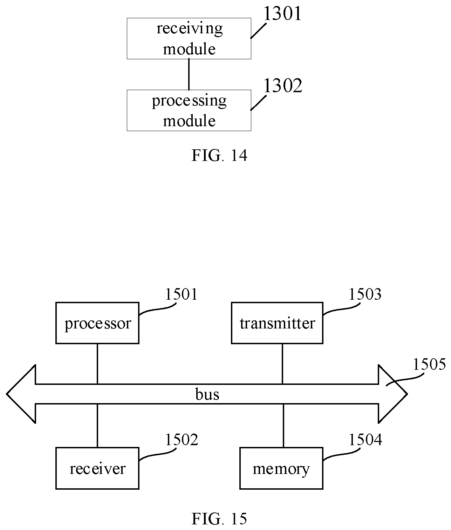

In some embodiments, referring to FIG. 14, the apparatus also includes:
a processing module 1302, used to initiate a random access process in a case that the uplink scheduling information sent by the neighboring cell is not monitored within a duration corresponding to the second information or the third information.

It should be noted that the apparatus provided in the above embodiments is illustrated only by the division of the above functional modules when implementing its function. In actual application, the above functions can be completed by different functional modules as needed, that is, the internal structure of the device is divided into different functional modules to complete all or part of the functions described above. In addition, the apparatus and method embodiments provided in the above embodiments belong to the same concept, and the specific implementation process is detailed in the method embodiment, which will not be repeated here.

FIG. 15 shows a schematic diagram of the structure of a communication device provided by an example embodiment of the present application, and the communication device includes: a processor 1501, a receiver 1502, a transmitter 1503, a memory 1504 and a bus 1505.

The processor 1501 includes one or more processing cores, and the processor 1501 executes various functional applications and information processing by running software programs and modules.

The receiver 1502 and the transmitter 1503 can be implemented as a communication component, which can be a communication chip.

The memory 1504 is connected to the processor 1501 via the bus 1505.

The memory 1504 can be used to store at least one program code, and the processor 1501 is used to execute the at least one program code to implement various steps in the above method embodiments.

In addition, the communication device can be a terminal or an access network device. The memory 1504 can be implemented by any type of transitory or non-transitory storage device or a combination thereof, and the transitory or non-transitory storage device includes but is not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an example embodiment, a computer-readable storage medium is also provided, an executable program code is stored in the readable storage medium, and the executable program code is loaded and executed by a processor to implement the time indication method performed by the communication device provided in the above-mentioned various method embodiments.

In an example embodiment, a chip is provided, the chip includes a programmable logic circuit and/or a program instruction, and the chip is used to implement the time indication method provided in each method embodiment when run on a terminal or an access network device.

In an example embodiment, a communication system is provided, the communication system includes a terminal, an access network device and a core network device, the terminal is used to implement the time indication methods as described above, and the access network device is used to implement the time indication methods as described above.

In an example embodiment, a computer program product is provided, the computer program product is used to implement the time indication method provided by the above-mentioned method embodiments when executed by a processor of a terminal or an access network device.

A person skilled in the art can understand that all or part of the steps of implementing the above-mentioned embodiments can be completed by hardware, or can be completed by instructing the relevant hardware through a program. The program can be stored in a computer-readable storage medium, and the storage medium mentioned above can be a read-only memory, a disk or an optical disk, etc.

The above description is only an optional embodiment of the present application and is not intended to limit the present application. Any modification, equivalent replacement, improvement, etc. made within the spirit and principle of the present application shall be included in the scope of protection of the present application.

## Claims

1. A time indication method, performed by a first access network device, the first access network device providing a serving cell for a terminal, and the method comprising:
sending first information to a neighboring cell, wherein the first information is used to indicate a time for the terminal to hand over to the neighboring cell.

2. The method according to claim 1, further comprising:
sending second information to the neighboring cell, wherein the second information is used to indicate an expected duration for the neighboring cell to send uplink scheduling information to the terminal.

3. The method according to claim 1 or 2, further comprising:
receiving third information sent by the neighboring cell, wherein the third information is used to indicate an actual duration for the neighboring cell to send uplink scheduling information to the terminal.

4. The method according to claim 2 or 3, further comprising:
sending second information or third information to the terminal, wherein the terminal is configured to monitor the uplink scheduling information sent by the neighboring cell based on the second information or the third information.

5. The method according to claim 1, wherein the first information comprises at least one of a first moment or a first time period.

6. The method according to claim 5, wherein the first information comprises the first moment, the first moment is used to indicate a moment when the neighboring cell sends uplink scheduling information to the terminal;
or,
the first information comprises the first time period, the first time period is used to indicate that the moment when the neighboring cell sends uplink scheduling information to the terminal belongs to the first time period.

7. A time indication method, performed by a second access network device, the second access network device covering a neighboring cell corresponding to a serving cell, and the method comprising:
receiving first information sent by the serving cell, wherein the first information is used to indicate a time for a terminal to hand over to the neighboring cell.

8. The method according to claim 7, further comprising:
receiving second information sent by the serving cell, wherein the second information is used to indicate an expected duration for the neighboring cell to send uplink scheduling information to the terminal.

9. The method according to claim 7 or 8, further comprising:
sending third information to the serving cell, wherein the third information is used to indicate an actual duration for the neighboring cell to send uplink scheduling information to the terminal.

10. The method according to claim 7, wherein the first information comprises at least one of a first moment or a first time period.

11. The method according to claim 10, further comprising:
the first information comprising the first moment, sending the uplink scheduling information to the terminal at the first moment;
or,
the first information comprising the first time period, sending the uplink scheduling information to the terminal at any moment in the first time period.

12. The method according to claim 11, wherein a duration of sending the uplink scheduling information is an expected duration indicated by second information, or an actual duration indicated by third information.

13. A time indication method, performed by a terminal, and the method comprising:
receiving second information or third information sent by a serving cell, wherein the second information is used to indicate an expected duration for a neighboring cell to send uplink scheduling information to the terminal, and the third information is used to indicate an actual duration for the neighboring cell to send uplink scheduling information to the terminal; and
monitoring the uplink scheduling information sent by the neighboring cell based on the second information or the third information.

14. The method according to claim 13, further comprising:
initiating a random access process in a case that the uplink scheduling information sent by the neighboring cell is not monitored within a duration corresponding to the second information or the third information.

15. A time indication apparatus, wherein the apparatus is arranged in a first access network device, the first access network device provides a serving cell for a terminal, and the apparatus comprises:
a sending module, configured to send first information to a neighboring cell, wherein the first information is used to indicate a time for the terminal to hand over to the neighboring cell.

16. A time indication apparatus, wherein the apparatus is arranged in a second access network device, the second access network device covers a neighboring cell corresponding to a serving cell, and the apparatus comprises:
a receiving module, configured to receive first information sent by the serving cell, wherein the first information is used to indicate a time for a terminal to hand over to the neighboring cell.

17. A time indication apparatus, wherein the apparatus is arranged in a terminal, and the apparatus comprises:
a receiving module, configured to receive second information or third information sent by a serving cell, wherein the second information is used to indicate an expected duration for a neighboring cell to send uplink scheduling information to the terminal, and the third information is used to indicate an actual duration for the neighboring cell to send uplink scheduling information to the terminal; and
a monitoring module, configured to monitor the uplink scheduling information sent by the neighboring cell based on the second information or the third information.

18. A terminal, comprising:
a processor; and
a transceiver connected to the processor;
wherein the processor is configured to load and execute executable instructions to implement the time indication method according to any one of claims 13 to 14.

19. An access network device, comprising:
a processor; and
a transceiver connected to the processor;
wherein the processor is configured to load and execute executable instructions to implement the time indication method according to any one of claims 1 to 12.

20. A communication system, wherein the communication system comprises a terminal, an access network device and a core network device, the terminal is configured to implement the time indication method according to any one of claims 13 to 14, and the access network device is configured to implement the time indication method according to any one of claims 1 to 12.

21. A computer-readable storage medium, wherein the readable storage medium stores executable program codes, and the executable program codes are loaded and executed by a processor to implement the time indication method according to any one of claims 1 to 14.
